# EUROPÄISCHE PATENTSCHRIFT

(11) **EP 0 478 744 B1**
(45) Veröffentlichungstag und Bekanntmachung des Hinweises auf die Patenterteilung: **14.08.1996**
(21) Anmeldenummer: 91907737.0
(22) Anmeldetag: 13.04.1991
(51) Int. Cl.: B01D 53/08, B01D 53/34, B01D 53/60, B01D 53/64

(54) **VERFAHREN ZUR REINIGUNG VON ABGASEN, INSBESONDERE AUS ABFALLVERBRENNUNGSANLAGEN**
DISCLOSED FOR PURIFYING EXHAUST GASES, IN PARTICULAR THOSE FROM WASTE-INCINERATION PLANTS
PROCEDE POUR L'EPURATION DE GAZ D'ECHAPPEMENT PROVENANT EN PARTICULIER D'USINES D'INCINERATION D'ORDURES

(30) Priorität: 23.04.1990 DE 4012887
(43) Veröffentlichungstag der Anmeldung: 08.04.1992
(73) Patentinhaber: NYMIC ANSTALT, FL-9494 Schaan (LI)
(72) Erfinder: RITTER, Jürgen, D-7000 Stuttgart 75 (DE)
(74) Vertreter: Lins, Edgar, Dipl.-Phys. Dr.jur.
(86) Internationale Anmeldenummer: DE9100314
(87) Internationale Veröffentlichungsnummer: WO9116122

(56) Entgegenhaltungen:
- EP-A- 0 283 721
- WO-A-90/07371
- DE-A- 3 601 917
- DE-A- 3 723 381

## Beschreibung

Die Erfindung betrifft ein Verfahren zum Reinigen von sauerstoffhaltigen, mit SO₂, HCl, NO_{X} und wenigstens einem Schwermetall sowie gegebenenfalls weiteren toxischen Gasen, insbesondere Furanen und Dioxinen, belasteten Abgasen, insbesondere von Müllverbrennungsanlagen, unter Verwendung von regenerierbaren Adsorptionsmaterialien.

Abgase aus Müllverbrennungsanlagen enthalten HCl, HF, SO_{X}, Hg und NO_{X} sowie hochtoxische organische PCDD/PCDF-Verbindungen, bekannt als Dioxine und Furane. Zum Zwecke der Luftreinhaltung sollen die Schadstoffe aus den Abgasen abgeschieden und soweit wie möglich als wiederverwendbare Wertstoffe zurückgewonnen werden.

Es sind zwei- oder mehrstufige auf Kalkbasis arbeitende Naßverfahren zur Abscheidung von HCl, HF und SO₂ bekannt, bei denen als Reaktionsprodukte vor allem CaCl₂ und CaSo₄ anfallen. Diese Reaktionsprodukte werden auf Deponien verbracht und gelagert. Weiterhin nachteilig bei diesen Verfahren ist, daß belastete Abwässer anfallen, die entweder einer Reinigung unterzogen oder thermisch beseitigt werden müssen. Erst nach der Reinigung der Abwässer können diese in einen Vorfluter oder in das Kanalsystem eingeleitet werden. Insgesamt ist dieses Verfahren kostenintensiv und belastet die Umwelt aufgrund der Lagerung der Reaktionsprodukte auf Deponien.

Es sind Konzepte bekanntgeworden (vgl. Chem.-Ing.-Tech. 60, 1988 Seite 247 - 255), mit denen prinzipiell bei der Reinigung im Naßwaschverfahren dem Abgas entzogene Schwermetalle aufgearbeitet und zurückgewonnen werden können. Da diese Verfahren sehr aufwendig sind, wird bei einem ungünstigen Kosten-Nutzen-Verhältnis eine Untertage-Entsorgung als wirtschaftlich sinnvoll und ökologisch möglich angesehen. Bei der Rückgewinnung der Schwermetalle fallen bei einem großen Kraftwerk 2000 t Salze pro Jahr an, die kontrolliert ins Meer abgeleitet werden sollen. Für Furane und Dioxine kann deren leichte Zerstörbarkeit bei mäßigen Temperaturen durch Rückführung der mit diesen Stoffen belasteten Gase in den Verbrennungsofen genutzt werden.

Es sind Vorschläge bekanntgeworden, unter Verwendung von Natronlauge als Neutralisationsmittel NaCl als ein industriell vermarktbares Produkt zu gewinnen und somit die Deponiestoffe zu verringern. Dieser Weg ist teuer und wäre nur gangbar, wenn in Anbetracht der hohen Reinheitsanforderungen an das in der Chlor-Alkali-Elektrolyse eingesetzte NaCl das im Abgas enthaltene HCl vorher von allen übrigen Schadstoffen weitgehend isoliert würde, was mit den bisher für die NaCl-Herstellung bekanntgewordenen Verfahren nicht möglich ist.

Es sind weiterhin Trockensorptionsverfahren bekannt, die trocken oder quasi-trocken gefahren werden und ebenfalls auf Kalkbasis arbeiten. Die anfallenden Reaktionsprodukte werden mit dem bei der Müllverbrennung anfallenden Flugstaub zusammen als Abfall deponiert. Bei den genannten Verfahren tritt das weitere Problem auf, daß die im Abgas enthaltenen Dioxine und Furane nicht abgeschieden werden.

Problematisch ist bei den Trocken- und Naßverfahren die Abscheidung des im gasförmigen Zustand vorliegenden Quecksilbers aus dem Abgas. Mit Trockensorptionsverfahren ist diese Abscheidung nicht, mit Naßwäschen zumindest nicht zuverlässig möglich.

In der DE-A-37 06 131 ist ein Verfahren zur Entfernung von Schadstoffen aus Rauchgas bekannt, bei dem in einer Naßwäsche vorbehandeltes Rauchgas durch eine Mehrzahl von Adsorberschüttungen geleitet wird. Dabei wird der Effekt ausgenutzt, daß sich Schadstoffe in den Adsorbern mit einer gewissen Selektivität anlagern, wobei kleinere Moleküle aus dem Adsorber ausgetrieben werden, wenn es zu einer Sättigung kommt. Die Gasbehandlung sieht vor, solche Gasbestandteile aus dem Abgas zu entfernen, die für eine anschließende katalytische Entstickung hinderlich sein könnten. In einer ersten Adsorberschüttung sollen Schwermetalle, insbesondere Quecksilber adsorbiert werden. In einer oder zwei weiteren Schüttungen werden SO₂ und HCl adsorbiert, das belastete Adsorptionsmaterial wird anschließend in eine weitere Adsorptionsstufe überführt, in der in dem Gas enthaltenes überschüssiges Ammoniak der Entstickungsstufe adsorbiert wird. Das mit Ammoniak, SO₂ und HCl beladene Adsorptionsmittel wird in der Kesselanlage anschließend verbrannt. Der in der ersten Adsorptionsstufe mit Schwermetall beladene Koks wird entsorgt, also deponiert. Als Adsorptionsmaterial wird in erster Linie (nicht regenerierbarer) Herdofenkoks verwendet. Dieses Verfahren ist nur im Anschluß an eine Vorreinigung der Rauchgase durchführbar, da anderenfalls alle adsorbierten Schadstoffe durch die Verbrennung des Adsorptionsmittels wieder in das Rauchgas überführt werden würden. Es ist auch erwähnt, daß teure Aktivkokssorten in den Adsorptionsstufen für die gasförmigen Schadstoffe verwendet und regeneriert werden könnten. Was mit den bei der Regeneration wieder frei werdenden Schadstoffen geschehen soll, wird dabei nicht erwähnt.

Das bekannte Verfahren ist aus den genannten Gründen nur für die Endreinigung von vorgereinigtem Rauchgas verwendbar.

Die Verbrennung des mit Schadstoffen beladenen Herdofenkokses birgt das Risiko, daß die Dioxine und Furane bei zu kurzer Verweilzeit im Kessel nicht zerstört werden oder sich wegen der Anwesenheit von O₂ und Cl₂ im Kesselbereich, möglicherweise noch gefördert durch katalytisch wirkende Kupferbestandteile in der Schlacke oder im Flugstaub, PCDD/PCDF-Rekombinate bilden, die zusammen mit den nicht zerstörten Dioxinen und Furanen allmählich zu einer Aufkonzentration dieser hochtoxischen Schadstoffe im Abgas führen. Um die Dioxine und Furane aus dem Abgasreinigungssystem auszuschleusen, bliebe demnach nur die Deponierung des mit Schadstoffen beladenen Herdofenkokses übrig, was jedoch die Menge der zu deponierenden Abfallprodukte weiter vergrößert.

In "Energie Spectrum", Juli 1989, Seiten 13 - 16 ist eine Übersicht über Merkmale üblicher verfahren verschiedener Anbieter veröffentlicht. Dabei wird deutlich, daß bei allen Adsorptionsverfahren entweder Deponiestoffe anfallen oder die beladenen Adsorptionskokse und -kohle verbrannt werden, was aus den oben bereits erwähnten Gründen nur sinnvoll sein kann, wenn die Adsorption nur für die Nachreinigung von Rauchgasen eingesetzt wird.

Bei bekannten Trockensorptionsverfahren werden alkalische Zusatzstoffe den Brennstoffen zugesetzt, um den Schadstoffausstoß von sauren Gasen zu reduzieren. Die Behandlung der so im Schadstoff reduzierten Rauchgase mit Adsorbern führt ebenfalls zu erheblichen Problemen. Mit den im Trockensorptionsverfahren eingesetzten Kalkprodukten kann Quecksilber beispielsweise nicht abgeschieden werden. Eine Verbrennung des beladenen Herdofenkokses im Kessel würde daher zu einer allmählichen Aufkonzentration von Quecksilber im Abgas führen. Deshalb denkt man in diesem Fall an eine Aufbereitung des Herdofenkokses in der Weise, daß das vom Herdofenkoks absorbierte Rest-SO₂, -HCl und -HF sowie das Quecksilber vom Herdofenkoks thermisch desorbiert wird, das Quecksilber anschließend auf einem mit Schwefel vergüteten Herdofenkoks wieder adsorbiert und die übrigen Schadstoffe sowie der von Schadstoffen entlastete Herdofenkoks zum Kessel zurückgeführt wird. Der nur mit Quecksilber beladene und mit Schwefel vergütete Herdofenkoks muß auf einer Sonderdeponie gelagert werden.

Inzwischen geht man bei Trockensorptionen noch einen anderen Weg, um die Dioxine und Furane sowie das Quecksilber zu erfassen. Dem in der Trockensorption eingesetzten Kalkprodukt, das der Abscheidung von SO₂, HCl und HF dient, wird eine geringe Menge Herdofenkoks beigefügt, der die Dioxine und Furane sowie das Quecksilber adsorbiert. Außerdem adsorbiert der Herdofenkoks auch noch gewisse Mengen an SO₂, HCl und HF.

Dieses Verfahren führt auch nur zu einer Vermehrung von Abfallprodukten, da der mit Schadstoffen beladene Herdofenkoks zusammen mit den Kalkreaktionsprodukten, meist noch vermischt mit Flugstaub, auf Deponien verbracht und dort gelagert werden muß.

Über die Lagerung von mit Dioxinen und Furanen, Quecksilber, SO₂, HCl und HF beladenem Herdofenkoks liegen noch keine Langzeiterfahrungen vor. Selbst eine Lagerung auf Sonderdeponien erscheint hinsichtlich der Dioxine und Furane und des Quecksilbers nicht unbedenklich. Bei Anwendung dieses Verfahrens für die Reinigung von Abgasen aus Hausmüllverbrennungsanlagen würden sich im übrigen die Deponiekosten bei notwendiger Lagerung der Reaktionsprodukte auf Sonderdeponien beträchtlich erhöhen, die bisher kostengünstiger auf Monodeponien gelagert werden.

Auch kann bei Anwendung dieses Verfahrens auf den zusätzlichen Einsatz eines Altivkohlefilters hinter der Trockensorption zur Abscheidung von Rest-SO₂, -HCl und -HF nicht verzichtet werden, da mit der Trockensorption nur schwer die geforderten niedrigen Restkonzentrationen an Schadstoffen im Reingas erreicht werden. Die Verbrennung des mit Schadstoffen beladenen Herdofenkokses im Kessel ist jedoch in diesem Fall unbedenklich, da nur SO₂, HCl und HF freigesetzt werden, für die die Trockensorption als Senke dient. Der Aktivkohlefilter dient hier lediglich zur Nachreinigung des Abgases, nicht jedoch für die Abscheidung von Dioxinen, Furanen und Hg.

Alle bekannten Rauchgasbehandlungsverfahren führen zu Abfallprodukten, die deponiert werden müssen, wenn eine Aufkonzentration der Abgase mit toxischen Stoffen vermieden werden soll.

Durch die DE-A-34 26 059 ist ein Verfahren bekannt, mit dem speziell organische Schadstoffe, insbesondere Dioxine und Furane, aus dem Rauchgas adsorptiv entfernt werden sollen. Dabei wird davon ausgegangen, daß bei dieser Abscheidung gleichzeitig auch andere Schadstoffe, wie SO₂ und Schwermetalle, abgeschieden werden. Die zur Absorption verwendete Aktivkohle bzw. der Aktivkoks wird einer üblichen Regeneration mit inerten Gasen im Temperaturbereich von etwa 350 - 750° C unterworfen. Zur Spaltung der Dioxine und Furane wird das aus der Regeneration abgezogene und mit den Schadstoffen belastete Desorptionsgas auf eine Temperatur von über 1000° C bis zu etwa 1400° C erhitzt. Dadurch soll die Spalttemperatur für die Dioxine und Furane überschritten werden, so daß diese sicher zersetzt werden. Die Verweilzeit bei dieser Spalttemperatur soll dabei in der Größenordnung von mehreren Sekunden, beispielsweise 5 - 10 Sekunden, liegen. Dabei soll es möglich sein, die Spaltung der Dioxine und Furane gleich bei der Desorption in der Regenerationsstufe durchzuführen. Ein Konzept für die weitere Behandlung der übrigen Schadstoffe ist in dieser Druckschrift nicht offenbart.

Der Erfindung liegt die Aufgabe zugrunde, ein Verfahren zum Reinigen von Rauchgasen der oben angegebenen Art anzugeben, bei dem keine zu deponierenden Abfallstoffe anfallen und das wirtschaftlich durchführbar ist.

Diese Aufgabe wird erfindungsgemäß mit einem Verfahren der eingangs erwähnten Art mit folgenden Verfahrensschritten gelöst:
- Das Abgas wird durch einen ersten Adsorber geleitet und dabei von SO₂, dem Schwermetall und weiteren toxischen Gasen befreit.
- Aus dem den Adsorber verlassenden Gas wird HCl entzogen.
- Anschließend wird NO_{X} des Gases zu einem unschädlichen Produkt umgesetzt.
- Das beladende Adsorptionsmaterial des ersten Adsorbers wird einer sauterstofffreien ersten Regeneration unterworfen.
- Das bei der ersten Regeneration freiwerdende Gas wird einem zweiten sauerstofffrei arbeitenden Adsorber zugeführt, wobei das Schwermetall adsobiert und somit von dem SO₂, das nicht adsorbiert wird, getrennt wird.

Bei dem erfindungsgemäßen Verfahren wird das Abgas mit seinen genannten Bestandteilen in den ersten Adsorber geleitet, wo das SO₂, die Schwermetalle, insbesondere Quecksilber, und toxische Gase, wie Dioxine und Furane adsorbiert werden. Im Porengefüge des Adsorptionsmaterials, das vorzugsweise Aktivkoks (Steinkohlenkoks) ist, wird das SO₂ katalytisch zu H₂SO₄ umgewandelt. Die Adsorption wird hinsichtlich der Höhe des Adsorptionsbettes, das vorzugsweise ein Wanderbett ist, und hinsichtlich der Verweilzeit des Gases in dem Adsorber so ausgelegt und gesteuert, daß die genannten Schadstoffe bis auf die meßtechnische Nachweisgrenze abgeschieden werden. In dem vorzugsweise verwendeten Gegenstromverfahren kann dabei vor allem eine Trennung von SO₂ einerseits und von ebenfalls im Abgas enthaltenen HCl und gegebenenfalls HF andererseits erreicht werden. Diese Trennung wird möglich, weil HCl und gegebenenfalls HF -im Gegensatz zu SO₂- von Adsorptionsmaterialien, wie beispielsweise Aktivkoks schlecht abgeschieden werden. Insbesondere aber verdrängt das adsorbierte SO₂ das wenige vom Adsorptionsmaterial adsorbierte HCl und gegebenenfalls HF. Beim Gegenstromverfahren wird in der oberen Aktivkoksschicht zunächst HCl und HF adsorbiert, da das durch diese Schicht strömende Abgas, bevor es den Adsorber verläßt, kein SO₂ mehr enthält, nachdem dieses in den unteren Schichten bereits adsorbiert worden ist. Bei der Verwendung eines Wanderbettes gelangt die obere, mit HCl und HF beladene Aktivkoksschicht allmählich in untere Schichten, wo sie mit SO₂ bzw. H₂SO₄ des Abgases in Berührung kommt. Dadurch werden HCl und HF vom Aktivkoks wieder desorbiert und statt dessen SO₂ adsorbiert. Daher wird bei dieser Verfahrensweise erreicht, daß HCl und HF den Adsorber nur durchwandern. Hinter dem Adsorber kann aus dem HCl, gegebenenfalls nach einer Trennung von dem möglicherweise vorhandenen HF, Salzsäure und/oder Natriumchlorid in marktgängigen Qualitäten hergestellt werden.

Neben seiner eigentlichen Funktion, nämlich der Abscheidung von Schadstoffen, dient der Adsorber kurzzeitig auch als ein das Abgas entstaubender Filter. Dies ist insbesondere dann von Bedeutung, wenn der eigentliche Filter für kurze Zeit ausfällt. Dabei werden mit Hilfe von Druckdifferenzmessungen geringe mit Flugstaub beladene Mengen an Aktivkoks, der in diesem Fall als Filtermedium dient, mit Hilfe eines feinfühlig steuerbaren Austragsystems ausgetragen, ohne den Rohgasstrom durch den Adsorber unterbrechen zu müssen. In jedem Fall findet aber durch das Aktivkoksbett im Adsorber eine Nachentstaubung des Abgases statt.

Für die Entstickung von Abgasen aus Müllverbrennungsanlagen stehen bekannte Verfahren zur Verfügung. Sie arbeiten unter Einsatz von SCR-Katalysatoren oder von speziellen Aktivkoksen zur NO_{X}-Reduktion mittels NH₃. Zur Entstickung des von allen anderen Schadstoffen gereinigten Abgases wird dieses vorzugsweise hinter der HCl-Rückgewinnung einem Entstickungsreaktor zugeführt, wobei dem Abgas vor und/oder während der Entstickung NH₃ zugemischt wird. Die Entstickung erfolgt zweckmäßigerweise mit einem speziellen Aktivkoks. Das NO_{X} wird katalytisch unter Einwirkung von NH₃ reduziert, so daß das in die Athmosphäre eingeleitete Gas weitgehend schadstofffrei ist. Die Verwendung eines Aktivkoks-Regenerationsreaktors für die Entstickung hat den Vorteil, daß der Entstickungsreaktor dabei die Funktion eines "Polizeifilters" übernimmt, wenn aufgrund einer Störung der vorgeschalteten Reaktoren mit den an sich bereits adsorbierten Schadstoffen belastetes Abgas in den Entstickungsreaktor gelangen sollte. Dies gilt sogar für Spuren von Dioxinen und Furanen, die in dem Aktivkoks des Entstickungsreaktors adsorbiert werden. Die eventuell adsorbierten Dioxine und Furane werden bei der von Zeit zu Zeit erfolgenden Regeneration zerstört. Das übrige Regenerationsgas, das dann gegebenenfalls mit HCL und SO₂ beladen sein kann, kann in das Abgas vor dem ersten Filter eingeleitet werden. Wird laufend eine geringe Menge von Aktivkoks aus dem Entstickungsreaktor ausgetragen, kommt dies der Entstickungsleistung des Aktivkoksbettes zugute, da durch die Umschichtung strömungstechnische Vorteile erzielt werden.

Zur Desorption der Schadstoffe SO₂ und Schwermetall, insbesondere Hg, die in der Adsorption vom Adsorptionsmaterial aus dem Abgas abgeschieden und aufkonzentriert wurden, wird das mit Schadstoffen beladene Adsorptionsmaterial einer thermischen Regeneration zugeführt. Bei der Regeneration wird das im Porengefüge des Adsorptionsmaterials, insbesondere Aktivkokses, befindliche H₂SO₄ wieder zu SO₂ umgewandelt und im Reichgas abgeführt, das ein Gemisch aus inertem Heizgas und den wieder in Gasform umgewandelten Schadstoffen darstellt, wenn in einer bevorzugten Ausführungsform die Aufheizung des beladenen Adsorptionsmaterials durch ein heißes Inertgas erfolgt. Im Reichgas ist auch das desorbierte Quecksilber in Gasform enthalten.

Das inerte Heizgas tritt vorzugsweise mit einer Eintrittstemperatur von über 550°C, insbesondere mit 650°C, im Gegenstrom durch das mit Schadstoffen beladene Adsorptionsmaterial hindurch. Um das Heizgas auf die gewünschte Temperatur einzustellen, kann es mit dem aus der Regeneration mit etwa 325°C austretenden Reichgas gemischt werden. Außerdem kann durch eine Variation der Reichgasmenge, die zurückgeführt und dem Inertgas zugemischt wird, der für die Wertstoffverwertung jeweils günstigste SO₂-Gehalt im Reichgas eingestellt werden. Mit dem Heizgas findet eine konvektive Aufheizung des mit Schadstoffen beladenen Adsorptionsmaterials statt, was dank des guten Wärmeübergangs bei Gegenstromführung des Heizgases zu relativ kurzen Desorptionszeiten und zu einem günstigen Energieverbrauch führt.

Bei der Aufheizung des mit Schadstoffen beladenen Adsorptionsmaterials mit einem Heizgas mit etwa 650°C und einer Verweilzeit des Adsorptionsmaterials in der ersten Regenerationsstufe von mehr als einer halben Stunde, vorzugsweise mehr als einer Stunde, werden die auf dem Adsorptionsmaterial haftenden Dioxine und Furane vollständig zerstört. Da die Regeneration sauerstofffrei gefahren wird, können sich keine PCDD/PCDF-Rekombinate bilden.

Das regenerierte Adsorptionsmaterial kann zum erneuten Einsatz in den ersten Adsorber zurückgeführt werden. Die geringen verbrauchten Adsorptionsmaterialmengen werden durch entsprechend zugeführtes frisches Adsorptionsmaterial ergänzt.

Das aus der ersten Regeneration abgezogene Reichgas enthält das desorbierte SO₂ und Schwermetall. Das Reichgas wird durch eine zweite Adsorption geführt, die sauerstofffrei gefahren wird und in der zweckmäßigerweise ebenfalls Aktivkoks als Adsorptionsmaterial eingesetzt wird.

Aufgrund des Mangels an Sauerstoff kann sich mit dem SO₂ keine Schwefelsäure bilden, so daß das SO₂ nicht adsorbiert wird, sondern den Adsorber durchwandert. Dagegen wird das Hg vom Aktivkoks adsorbiert. Bei der zweiten Adsorption findet somit eine Trennung von SO₂ und Hg statt. Das den zweiten Adsorber verlassende Gas enthält SO₂ in aufkonzentrierter Form, so daß daraus verkaufbare Schwefelprodukte hergestellt werden können. Auch dieser Verfahrensschritt dient wieder der Verringerung der Deponiestoffe, also der Umwandlung von Schadstoffen in wiederverwendbare Wertstoffe.

Bei dem erfindungsgemäßen Verfahren wird die Aufbereitung der dem Rauchgas entzogenen Schadstoffe mit den Adsorbern demgemäß so vorgenommen, daß alle Schadstoffe als Wertstoffe zurückgewonnen werden können. Der vorzugsweise eingesetzte Aktivkoks wird in einem Kreislauf zwischen ständiger Adsorption und Regeneration geleitet. Bei dem erfindungsgemäßen Reinigungskonzept kann eine Aufkonzentration durch die Verbrennung von belasteter Kohle o. ä. nicht erfolgen, da die Verbrennung von Adsorptionsmaterialien nicht vorgesehen ist.

Das mit dem Schwermetall, insbesondere Hg, beladene Adsorptionsmaterial wird aus dem zweiten Adsorber abgezogen und vorzugsweise einer speziellen Regeneration für die Rückgewinnung der Schwermetalle zugeführt. In dieser Regeneration wird beispielsweise das Hg vom Aktivkoks mit Hilfe eines Heizgases mit einer Eintrittstemperatur von über 550°C, insbesondere mit 650°C, desorbiert. Das Desorptionsgas wird kondensiert, so daß man auf diese Weise die Schwermetalle in metallischer Form erhält. Nach der Reinigung des Kondensates steht beispielsweise wiederverwendbares Quecksilber zur Verfügung. Der regenerierte Aktivkoks kann erneut zur Adorption eingesetzt werden.

Mit dem neuen Verfahren werden somit die sich im Abgas der Abfallverbrennungsanlage befindlichen Schadstoffe nicht nur zuverlässig aus dem Abgas abgeschieden, sondern die Schadstoffe werden weitgehend zu verkaufsfähigen Produkten umgewandelt. Eine Deponierung ist nicht erforderlich.

Dies kann auch für den bei der Entstaubung anfallenden Flugstaub erreicht werden. Dieser kann auf eine Temperatur von ≧1200°C erhitzt werden. Bei dieser Temperatur findet eine Verdampfung der Schwermetalle und eine Bildung von Schwermetallsalzen statt. Diese Stoffe können abgefiltert und anschließend einer Verhüttung zugeführt werden. Die Ballaststoffe werden zu inertem Material verglast, das z. B. im Straßenbau eingesetzt werden kann.

Problematisch ist jedoch das im Abgas aus der Erhitzung des Flugstaubes enthaltene Hg. Bei den bekannten Verfahren wird dieses Abgas mit dem Rohgas der Abfallverbrennungsanlage vermischt. Das Hg landet dabei mit den anderen Reaktionsprodukten letztendlich auf einer Deponie.

Zur Vermeidung der Deponierung von Reaktionsprodukten mit Hg kann das Abgas, das aus der Schmelze des Flugstaubes austritt, hinter dem Filter für die Abscheidung der Schwermetallsalze einer dritten Adsorption zugeführt werden, in der das Hg aus dem Abgas abgeschieden wird. Aber auch Reste von Dioxinen und Furanen, die aufgrund einer zu kurzen Verweilzeit bei der thermischen Behandlung des Flugstaubes nicht zerstört werden, und/oder Rekombinate von PCDDs und PCDFs, werden in der dritten Adsorption abgeschieden, so daß eine Umweltbelastung mit diesen Schadstoffen zuverlässig vermieden wird.

Vorteilhafterweise wird auch bei der dritten Adsorption Aktivkoks verwendet. Der beladene Aktivkoks wird dann der speziellen Regeneration für die Hg-Rückgewinnung zugeführt. In der Regeneration werden die Dioxine und Furane vollständig zerstört. Das Hg wird, wie bereits oben beschrieben, zurückgewonnen.

In der zweiten und/oder dritten Adsorption wird der unbelastete Aktivkoks aus der Hg-Desorption verwendet. Zwischen der zweiten und/oder dritten Adsorption und der Regeneration für die Hg-Rückgewinnung besteht ein in sich geschlossener Aktivkokskreislauf wie zwischen dem ersten Adsorber und der ersten Regeneration. Eine Deponierung von mit Schadstoffen beladenen Aktivkohlen ist somit nicht erforderlich.

Zur Befreiung des Abgases von aggressivem SO₃ kann das Abgas nach dem Durchlaufen eines ersten Filters zur Abscheidung von Flugstaub durch eine mit NH₃ angereicherte Quenche vor dem ersten Adsorber geleitet werden. Das SO₃ bildet mit dem NH₃ Ammonsalze, die im ersten Adsorber adsobiert werden. In einer alternativen Ausführungsform wird das NH₃ dem Abgas bereits vor dem zur Abscheidung von Flugstaub vorgesehenen Filter zugegeben. Die dabei gebildeten Ammonsalze können dann mit dem Flugstaub aus dem Abgas entfernt und bei der Aufbereitung des Flugstaubes thermisch zerstört werden.

Weitere Merkmale der vorliegenden Erfindung sind Gegenstand der Unteransprüche und werden mit weiteren Vorteilen der Erfindung anhand eines Ausführungsbeispiels näher erläutert.

Es zeigen:
- Figur 1: eine schematische Darstellung eines Verfahrens zur Reinigung von Abgasen und Wertstoffrückgewinnung,
- Figur 2: eine schematische Darstellung für eine von einer speziellen Reinigungsanlage separat betriebenen Anlage zur Wertstoffrückgewinnung.

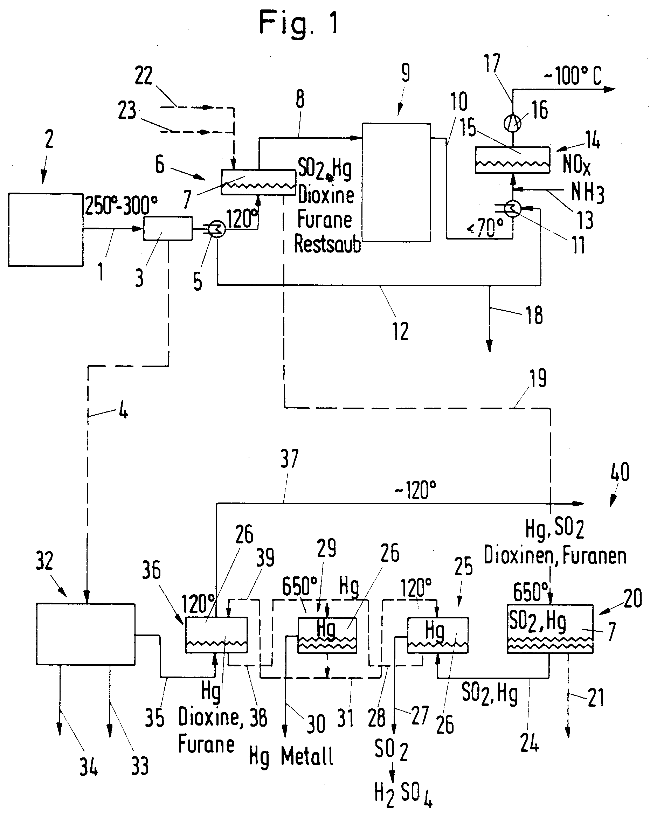

Figur 1 zeigt, in schematisierter Form, ein Verfahren zur Reinigung von Abgasen 1 aus einer Müllverbrennungsanlage 2. Das Abgas 1 tritt mit einer Temperatur von etwa 250°C bis 300°C aus und wird durch einen Elektrofilter 3 geleitet. In dem Elektrofilter 3 wird Flugstaub 4 abgeschieden. Nach dem Elektrofilter 3 ist ein Wärmetauscher 5 und eine nicht dargestellte, mit NH₃ angereicherte Quenche angeordnet, die das Abgas 1 auf eine Temperatur von etwa 120°C abkühlen und von aggressivem SO₃ befreien. Das derart abgekühlte Abgas 1 wird durch einen Adsorber 6 geführt, der mit Aktivkoks 7 gefüllt ist. Aus dem Adsorber 6 tritt ein vorgereinigtes Gas 8 aus, aus dem das HCl in einem Prozeßschritt 9 zur Herstellung von Salzsäure oder NaCl verwendet wird. Anschließend wird das fast nur noch NO_{X} enthaltende Gas 10, welches eine Temperatur unter 70°C aufweist, mittels eines Wärmetauschers 11 auf etwa 120°C aufgeheizt. Der Wärmetauscher 11 steht mit dem Wärmetauscher 5 über eine Leitung 12 in Verbindung. Nach der Aufheizung des Gases 10 findet eine Zumischung 13 von NH₃ in Form von Ammoniakwasser statt. Das mit NH₃ vermischte Gas 10 wird einem Entstickungsreaktor 14 zugeführt, der mit Aktivkoks 15 gefüllt ist. Hinter dem Entstickungsreaktor 14 ist ein Gebläse 16 angeordnet, das das Gas 1, 8, 10 ansaugt und Reingas 17 zu einem hier nicht dargestellten Kamin leitet.

Die Leitung 12, die die beiden Wärmetauscher 5 und 11 miteinander verbindet, weist einen Abzweig 18 auf, über den eine Teilwärme für den Prozeßschritt 9 zur Herstellung von Salzsäure oder NaCl geleitet werden kann.

Der Aktivkoks 7 des Adsorbers 6 wird, wie schematisch durch einen Pfeil 19 dargestellt, dem Regenerator 20 zugeführt. Der in dem Regenerator 20 regenerierte Aktivkoks 7 wird in dem Adsorber 6 wiederverwendet, was durch die Pfeile 21 und 22 angedeutet ist. Der Pfeil 23 symmbolisiert die Zugabe von frischem Aktivkoks, da im Prozeßablauf geringe Mengen von Aktivkoks verbraucht werden.

Aus dem Regenerator 20 tritt Reichgas 24 aus, in dem SO₂, und Hg enthalten sind. Das Reichgas 24 wird durch eine zweite Adsorption 25 geleitet, wodurch aus dem Reichgas 24 Hg adsorbiert wird. Die zweite Adsorption 25 wird mit Aktivkoks 26 durchgeführt, an dem sich das Hg ablagert. Das den zweiten Adsorber 25 verlassende Gas 27 weist SO₂ in konzentrierter Form auf, so daß daraus vorteilhaft Schwefelprodukte hergestellt werden können.

Der mit Hg beladene Aktivkoks 26 wird, wie durch Pfeil 28 gezeigt, einer zweiten Regeneration 29 zugeführt. Das den zweiten Regenerator 29 verlassende Gas 30 wird kondensiert und anschließend das Kondensat gereinigt, wonach verwertbares Quecksilber zur Verfügung steht.

Zumindest ein Teil des regenerierten Aktivkokses 26 wird aus dem zweiten Regenerator 29 dem zweiten Adsorber 25 zugeführt, wie durch den Pfeil 31 angedeutet ist.

Der mit dem Elektrofilter 3 aus dem Abgas 1 abgeschiedene Flugstaub 4 wird einem Schmelzofen 32 zugeführt. Hinter dem Schmelzofen 32 werden zur Verhüttung geeignete Schwermetalle 33 und z.B. für den Straßenbau verwendbares glasartiges Granulat 34 gewonnen.

Das den Schmelzofen 32 verlassende Abgas 35 wird in einen dritten Adsorber 36 geleitet, in dem mittels Aktivkoks 26 das Abgas 35 gereinigt wird. Das den dritten Adsorber 36 verlassende und gereinigte Gas 37 wird zu einem nicht dargestellten Kamin abgeführt.

Der in der dritten Adsorption 36 beladene Aktivkoks 26 wird, wie es ein Pfeil 38 symbolisiert, in den zweiten Regenerator 29 gebracht und regeneriert. Ein Teil des regenerierten Aktivkokses 26 wird, wie durch einen Pfeil 39 angedeutet im Austausch gegen beladenen Aktivkoks zum dritten Adsorber 36 zurückgeführt.

Im folgenden wird nun die Funktion der ersten Ausführungsform näher beschrieben.

Aus der Müllverbrennungsanlage 2 tritt das Abgas 1 mit einer Temperatur von etwa 250°-300°C aus. Das Abgas 1 enthält im wesentlichen die Schadstoffe HCl, HF, SO_{X}, Hg und NO_{X} sowie PCDD- und PCDF-Verbindungen. Zusammen mit dem Abgas 1 wird auch der Flugstaub 4 transportiert, der von dem Elektrofilter 3 aus dem Abgas 1 abgeschieden und dem Schmelzofen 32 zugeführt wird. Hinter dem Elektrofilter 3 wird das Abgas 1 mit Hilfe des Wärmetauschers 5 und der Quenche auf eine Temperatur von etwa 120°C abgekühlt und vom SO₃ befreit und anschließend durch den mit Aktivkoks 7 gefüllten Adsorber 6 geleitet. In dem Adsorber 6 wird aus dem Abgas 1 SO₂, Hg, Dioxine und Furane abgeschieden. HCl und HF dagegen durchlaufen den Adsorber 6, so daß das vorgereinigte Gas 8 außer NO_{X} nur noch HCl und HF enthält. Der Ausschluß von HCl und HF wird dadurch erreicht, daß durch die Gegenstromführung des Abgases 1 durch das den Adsorber langsam von oben nach unten wandernde Aktivkoksbett das SO₂ das HCl und HF immer wieder verdrängt, so daß letztlich kein HCl und HF vom Aktivkoks dauerhaft adsorbiert werden kann.

Neben der eigentlichen Aufgabe des Adsorbers 6, dem Abscheiden von Schadstoffen, dient der Adsorber 6 weiterhin zur Nachentstaubung des Abgases 1. Damit ist sichergestellt, daß, auch bei kurzzeitigem Ausfall des Elektrofilters 3, das vorgereinigte Gas 8 weitgehend frei von Flugstaub 4 ist.

In dem vorgereinigten Gas 8 befindet sich mithin aufgrund der Adsorption in dem Adsorber 6 außer NO_{X} nur noch HCl und HF. Damit ist das vorgereinigte Gas 8 dafür geeignet, in dem Prozeßschritt 9 zur Herstellung von Salzsäure oder NaCl verwendet zu werden. Diese in dem Prozeßschritt 9 gewonnenen Produkte sind verkaufsfähig bzw. wiederverwendbar, so daß das Vorfahren sowohl umweltals auch wirtschaftlichen Gesichtspunkten in besonderer Weise gerecht wird.

Nach dem Prozeßschritt 9 hat das Gas 10 eine Temperatur unterhalb von 70°C. Mit Hilfe des zweiten Wärmetauschers 11, der über die Leitung 12 mit dem ersten Wärmetauscher 5 verbunden ist, wird das Gas 10 auf etwa 100°C aufgeheizt. Im Anschluß daran wird dem Gas 10 NH₃ zugemischt und durch den Entstickungsreaktor 14 geführt, der mit einem speziellen Aktivkoks 15 gefüllt ist. Damit wird eine katalytische Zersetzung von NO_{X} erreicht. Am Ausgang des Entstickungsreaktors 14 tritt das von Schadstoffen befreite Reingas 17 aus, das von dem Gebläse 16 über den Kamin in die Atmosphäre geleitet wird. Bei Verwendung eines Wanderbettes im Entstickungsreaktor 14 kann dieser als Nachentstaubungsstufe dienen.

Der Aktivkoks 7 des Adsorbers 6, der im wesentlichen mit Hg, H₂SO₄, Dioxinen und Furanen beladen ist, wird dem ersten Regenerator 20 zugeführt. In dem Regenerator 20 werden H₂SO₄ und Hg vom Aktivkoks 7 thermisch desorbiert und zwar durch eine direkte Aufheizung des Aktivkokses 7 mit einem inerten Heizgas, das mit einer Gaseintrittstemperatur von etwa 650°C im Gegenstrom durch den Aktivkoks 7 geleitet wird. Das Reichgas 24 verläßt die Regeneration 20 mit etwa 325°C.

Es ist wesentlich, daß der erste Regenerator 20 sauerstofffrei gefahren wird. Die Dauer der Regeneration soll etwa 1 Stunde betragen. Dadurch wird sichergestellt, daß die Dioxine und Furane vollständig zerstört werden und eine Bildung von Rekombinaten an PCDDs und PCDFs ausgeschlossen ist.

Der regenerierte Aktivkoks 7, der frei von Schadstoffen ist, wird im Austausch mit beladenem Aktivkoks 7 dem Adsorber 6 wieder zugeführt.

Das den Regenerator 20 verlassende Reichgas 24 enthält im wesentlichen SO₂ und Hg. Dieses Reichgas 24 wird der zweiten Adsorption 25 zugeführt, die sauerstofffrei betrieben wird. Aufgrund des sauerstofffreien Betriebes kann sich mit dem SO₂ keine Schwefelsäure bilden, so daß in dem Aktivkoks 26 der zweiten Adsorption 25 nur das Hg adsorbiert wird, das SO₂ dagegen den zweiten Adsorber 25 durchwandert. Somit wird bei der zweiten Adsorption 25, die in etwa bei 120°C durchgeführt wird, das SO₂ von dem Hg getrennt. Das SO₂ ist in dem den zweiten Adsorber 25 verlassenden Gas 27 in aufkonzentrierter Form enthalten und dient zur Herstellung von verkaufsfähigen Schwefelprodukten.

Der Hg-haltige Aktivkoks 26 der zweiten Adsorption 25 wird in der zweiten Regeneration 29, die ebenfalls sauerstofffrei betrieben wird, regeneriert. Bei der während der zweiten Regeneration 29 herrschenden Temperatur von etwa 600°-650°C wird das Hg desorbiert. Das Desorptionsgas wird anschließend kondensiert, um auf diese Weise Hg in metallischer Form zu erhalten. Nach der Reinigung des Kondensates steht verwertbares Quecksilber zur Verfügung.

Der in der zweiten Regeneration 29 regenerierte Aktivkoks 26 wird zumindest zum Teil im Austausch mit beladenem Aktivkoks 26 wieder der zweiten Adsorption 25 zugeführt.

Wie bereits oben ausgeführt, wird aus dem Abgas 1 hinter der Müllverbrennungsanlage 2 mit Hilfe des Elektrofilters 3 der Flugstaub 4 abgeschieden. Dieser wird in dem Schmelzofen 32 auf eine Temperatur von etwa 1200°C oder höher erhitzt. Die in dem Flugstaub 4 enthaltenen Schwermetalle verdampfen und bilden Schwermetallsalze, die einer Verhüttung zugeführt werden können. Die Ballaststoffe werden zu einem glasähnlichen Granulat 34 verglast. Das auf dem Flugstaub haftende Quecksilber bildet aufgrund seiner Flüchtigkeit in dem Schmelzofen 32 keine Schwermetallsalze und wird aus dem Schmelzofen 32 mit dem Abgas 35 ausgetragen. In dem Abgas 35 befinden sich auch noch Dioxine und Furane, die aufgrund einer zu kurzen Verweilzeit in dem Schmelzofen 32 nicht zerstört wurden, möglicherweise auch PCDD- und PCDF-Rekombinate. Diese Schadstoffe, also Hg, Dioxine und Furane, werden aus dem Abgas 35 in der dritten Adsorption 36, die mit etwa 120°C betrieben wird, von dem Aktivkoks 26 adsorbiert. Das schadstofffreie Gas 37, dessen Temperatur etwa 120°C beträgt, wird einem hier nicht dargestellten Kamin zugeführt.

Der mit Hg, Dioxinen und Furanen beladene Axtivkoks 26 der dritten Adsorption 36 wird in der zweiten Regeneration 29 regeneriert. Dabei werden die Dioxine und Furane, wie bereits im Zusammenhang mit der ersten Regeneration 20 beschrieben, zerstört und das Quecksilber zurückgewonnen.

Die zweite Regeneration 29 sowie die Adsorber 25 und 36 sind im Verhältnis zu der Regeneration 20 und zu dem Adsorber 6 relativ klein und kompakt, da die in ihnen eingesetzten Aktivkoksmengen und die durch die Adsorber 25 und 36 durchgeschleusten Gasvolumenströme im Verhältnis zum Volumenstrom des Abgases 1 klein sind.

Bei diesem Verfahren wird insgesamt neben der Reinigung des Abgases 1 erreicht, daß die sich im Abgas 1 befindlichen Schadstoffe durch mehrfache Adsorption und Regeneration separiert werden und daraus verkaufsfähige Produkte herstellbar sind.

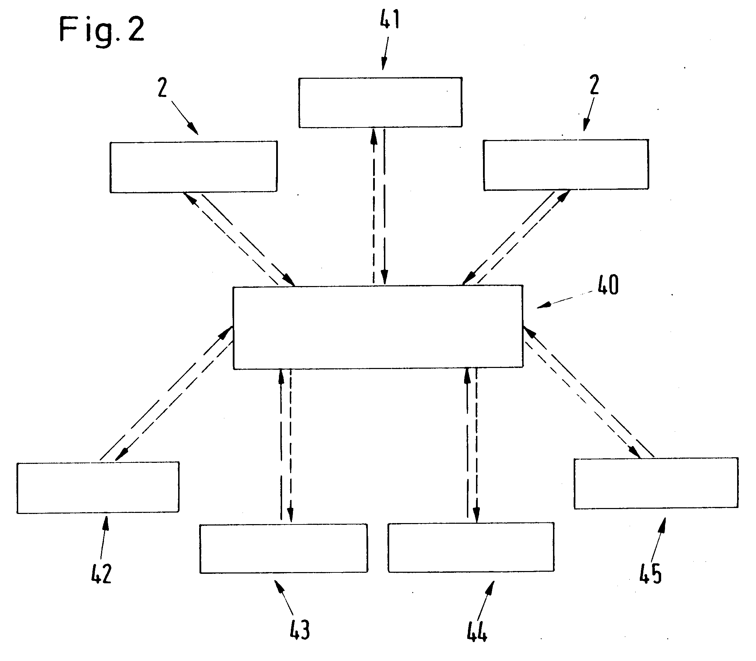

Die Darstellung in Figur 2 beruht auf den gleichen Verfahrensschritten, wie sie anhand der Figur 1 beschrieben sind. Ein wesentlicher Unterschied besteht jedoch darin, daß die eigentliche Müllverbrennungsanlage 2 mit der nachgeschalteten Reinigungsanlage des Abgases 1 nicht direkt mit einer Wertstoffverwertungsanlage 40 verbunden ist. Der beladene Aktivkoks 7 einer oder mehrerer Müllverbrennungsanlagen 2 sowie von anderen Abgasreinigungsanlagen 41 und beispielsweise von einem Kleinkraftwerk 42, einer Dekontaminierung von Böden 43, einem Industriekessel 44 oder von industriellem Prozeßgas 45 werden der Wertstoffverwertungsanlage 40 zugeführt. Die Wertstoffverwertungsanlage 40 wird somit von mehreren kleineren Anlagen, bei denen sich der Bau einer eigenen Wertstoffverwertungsanlage 40 aus wirtschaftlichen Gesichtspunkten nicht lohnt, gemeinsam genutzt.

## Patentansprüche

1. Verfahren zum Reinigen von sauerstoffhaltigen, mit SO₂, HCl, NO_{X} und wenigstens einem Schwermetall sowie gegebenenfalls weiteren toxischen Gasen, insbesondere Furanen und Dioxinen, belasteten Abgasen (1), insbesondere von Müllverbrennungsanlagen, unter Verwendung von regenerierbaren Adsorptionsmaterialien, mit folgenden Verfahrensschritten:
- Das Abgas (1) wird durch einen ersten Adsorber (6) geleitet und dabei von SO₂, dem Schwermetall und weiteren toxischen Gasen befreit.
- Nach dem Verlassen des Adsorbers (6) wird dem Gas HCl entzogen.
- Anschließend wird NO_{X} des Gases zu einem unschädlichen Produkt umgesetzt.
- Das beladende Adsorptionsmaterial (7) des ersten Adsorbers (6) wird einer sauerstofffreien ersten Regeneration (20) unterworfen.
- Das bei der ersten Regeneration (20) freiwerdende Gas wird einem zweiten sauerstofffrei arbeitenden Adsorber (25) zugeführt, wobei das Schwermetall adsobiert und somit von dem SO₂, das nicht adsorbiert wird, getrennt wird.

2. Verfahren nach Anspruch 1, bei dem das SO₂-Gas, das den zweiten Adsorber (25) durchlaufen hat zu Schwefelsäure verarbeitet wird.

3. Verfahren nach Anspruch 1 oder 2, bei dem das im zweiten Adsorber (25) adsorbierte Schwermetall in einer zweiten Regenerationsstufe (29) vom Adsorptionsmaterial getrennt und in metallischer Form gewonnen wird.

4. Verfahren nach einem der Ansprüche 1 bis 3, bei dem die erste Regeneration bei einer die gegebenenfalls im Abgas enthaltenen und daraus adsorbierten toxischen Gase, insbesondere Dioxine und Furane, zersetzenden Temperatur erfolgt.

5. Verfahren nach Anspruch 4, bei dem die Temperatur über 550°C liegt.

6. Verfahren nach Anspruch 5, bei dem die Temperatur bei 650°C liegt.

7. Verfahren nach einem der Ansprüche 1 bis 6, bei dem zur Durchführung der ersten Regeneration heißes Inertgas im Gegenstrom durch das in einem Reaktor befindliche beladene Adsorptionsmaterial (7) geleitet wird.

8. Verfahren nach einem der Ansprüche 1 bis 7, bei dem die Verweilzeit des Adsorptionsmaterials (7) in dem Reaktor für die erste Regeneration eine halbe Stunde oder mehr beträgt.

9. Verfahren nach einem der Ansprüche 1 bis 8, bei dem das NO_{X} nach Durchlaufen des ersten Adsorbers (6) und der separation von HCl-Gas durch Zugabe von Ammoniak in einem Reaktor (14) katalylisch zersetzt wird.

10. Verfahren nach Anspruch 9, bei dem das Gas vor der katalytischen Zersetzung mit einem Wärmetauscher (11) auf eine Temperatur von 100°C aufgeheizt wird.

11. Verfahren nach Anspruch 9 oder 10, bei dem das Abgas vor dem ersten Adsorber (6) mit einem Wärmetauscher (5) abgekühlt wird.

12. Verfahren nach Anspruch 10 und 11, bei dem die beiden Wärmetauscher miteinander verbunden sind.

13. Verfahren nach einem der Ansprüche 1 bis 12, bei dem dem ersten Adsorber (6) ein Staubfilter (3) vorgeschaltet ist.

14. Verfahren nach Anspruch 13, bei dem als Staubfilter (3) ein Elektrofilter verwendet wird.

15. Verfahren nach Anspruch 13 oder 14, bei dem der im Staubfilter (3) abgefilterte Flugstaub (4) stark erhitzt wird.

16. Verfahren nach Anspruch 15, bei dem das bei der starken Erhitzung des Flugstaubes entstehende Abgas (35) einem dritten Adsorber (36) zugeleitet wird.

17. Verfahren nach Anspruch 16, bei dem das Adsorptionsmaterial (26) des dritten Adsorbers einer sauerstofffreien Regeneration bei einer adsorbierte toxische Gase zersetzenden Temperatur unterworfen wird.

18. Verfahren nach Anspruch 17, bei dem das Adsorptionsmaterial (26) des dritten Adsorbers (36) der zweiten Regenerationsstufe (29) zugeführt wird.

19. Verfahren nach Anspruch 17 oder 18, bei dem die Verweilzeit des Adsorptionsmaterials (26) des dritten Adsorbers (36) während der Regeneration eine halbe Stunde oder mehr beträgt.

20. Verfahren nach Anspruch 8 oder 19, bei dem die Verweilzeit eine Stunde oder mehr beträgt.

21. Verfahren nach einem der Ansprüche 1 bis 20, bei dem Aktivkoks als Adsorptionsmaterial (7, 26) verwendet wird.

22. Verfahren nach einem der Ansprüche 1 bis 21, bei dem das Abgas durch eine mit NH₃ angereicherte Quenche vor dem ersten Adsorber (6) geleitet wird.

23. Verfahren nach einem der Ansprüche 13 bis 19, sowie 20 und 21 sofern diese auf einen der Ansprüche 13-19 zurückbezogen sind, bei dem in das Abgas (1) vor dem Filter (3) NH₃ eingespeist wird.

24. Verfahren nach einem der Ansprüche 1 bis 23, bei dem in einem Prozeßschritt nach Verlassen des ersten Adsorbers (6) mit dem Gas Salzsäure oder NaCl hergestellt wird.

## Claims

1. Process for the purification of oxygen-containing waste gases (1), in particular from incineration plants, which gases are contaminated with SO₂, HCl, NOₓ and at least one heavy metal and possibly other toxic gases, in particular furans and dioxins, with the use of regenerable adsorbent materials, by the following procedural steps:
- the waste gas is conducted through a first adsorber (6) and in the course of this is freed from SO₂, the heavy metal and other toxic gases,
- after the gas has left the adsorber (6), the HCl is removed from the said gas,
- NOₓ in the gas is subsequently converted to a harmless product,
- the contaminated adsorbent material (7) of the first adsorber (6) is subjected to an oxygen-free first regeneration (20),
- the gas released during the first regeneration (20) is passed to a second adsorber (25) operating oxygen-free, wherein the heavy metal is adsorbed and consequently separated from the SO₂, which is not adsorbed.

2. Process according to claim 1, wherein the SO₂ gas which has passed through the second adsorber (25) is processed to form sulphuric acid.

3. Process according to claim 1 or 2, wherein the heavy metal adsorbed in the second adsorber (25) is separated from the adsorbent material in a second regeneration step (29) and recovered in metallic form.

4. Process according to one of claims 1 to 3, wherein the first regeneration is carried out at a temperature whereat the toxic gases possibly contained in the waste gas and adsorbed therefrom, in particular dioxins and furans, are decomposed.

5. Process according to claim 4, wherein the temperature is above 550°C.

6. Process according to claim 5, wherein the temperature is 650°C.

7. Process according to one of claims 1 to 6, wherein in order to carry out the first regeneration hot inert gas is passed countercurrently through the contaminated adsorbent material (7) contained in a reactor.

8. Process according to one of claims 1 to 7, wherein for the first regeneration the residence time of the adsorbent material (7) in the reactor is half an hour or more.

9. Process according to one of claims 1 to 8, wherein the NOₓ, after passage through the first adsorber (6) and the separation of HCl gas, is catalytically decomposed in a reactor (14) by the addition of ammonia.

10. Process according to claim 9, wherein prior to the catalytic decomposition the gas is heated to a temperature of 100°C by means of a heat exchanger (11).

11. Process according to claim 9 or 10, wherein before entering the first adsorber (6) the waste gas is cooled by means of a heat exchanger (5).

12. Process according to claims 10 and 11, wherein the two heat exchangers are connected to one another.

13. Process according to one of claims 1 to 12, wherein a dust filter (3) is serially connected in front of the first adsorber (6).

14. Process according to claim 13, wherein the dust filter (3) used is an electrical precipitator.

15. Process according to claim 13 or 14, wherein the entrained dust (4) filtered off in the dust filter (3) is vigorously heated.

16. Process according to claim 15, wherein the waste gas (35) formed during the vigorous heating of the entrained dust is passed to a third adsorber (36).

17. Process according to claim 16, wherein the adsorbent material (26) of the third adsorber is subjected to an oxygen-free regeneration at a temperature whereat adsorbed toxic gases are decomposed.

18. Process according to claim 17, wherein the adsorbent material (26) of the third adsorber (36) is passed to the second regeneration step (29).

19. Process according to claim 17 or 18, wherein during the regeneration the residence time of the adsorbent material (26) of the third adsorber (36) is half an hour or more.

20. Process according to claim 8 or 19, wherein the residence time is one hour or more.

21. Process according to one of claims 1 to 20, wherein the adsorbent material (7, 26) used is activated carbon.

22. Process according to one of claims 1 to 21, wherein the waste gas is passed through a quench enriched with NH₃ before entering the first adsorber (6).

23. Process according to one of claims 13 to 19, as well as 20 and 21 provided that these are dependent on one of claims 13 to 19, wherein NH₃ is fed into the waste gas (1) before entering the filter (3).

24. Process according to one of claims 1 to 23, wherein hydrochloric acid or NaCl is prepared in one processing step using the gas which has left the first adsorber (6).

## Revendications

1. Procédé d'épuration de gaz d'évacuation (1) oxygénifères, charges de SO₂, HCl, NOₓ et d'au moins un métal lourd, ainsi que le cas échéant d'autres gaz toxiques, notamment de furanes et de dioxines, en particulier issus d'usines d'incinération d'ordures, en utilisant des matériaux adsorbants pouvant être régénérés, comprenant les étapes de procédé suivantes :
- on fait passer le gaz d'évacuation (1) par un premier dispositif d'adsorption (6) et on le débarrasse à cette occasion du SO₂, du métal lourd et des autres gaz toxiques.
- une fois que le gaz a quitté le dispositif d'adsorption (6), on extrait le HCl du gaz.
- ensuite le NOₓ du gaz est transformé en un produit inoffensif.
- le matériau adsorbant (7) chargé du premier dispositif d'adsorption (6) est soumis à une première régénération (20), exempte d'oxygène.
- le gaz dégagé par la première régénération (20) est envoyé à un deuxième dispositif (25) d'adsorption fonctionnant sans oxygène, à l'occasion de quoi le métal lourd est adsorbé, et ainsi séparé du SO₂, qui n'est pas adsorbé.

2. Procédé selon la revendication 1, dans lequel en transforme en acide sulfurique le gaz SO₂ qui est passé dans le deuxième dispositif d'adsorption (25).

3. Procédé selon la revendication 1 ou 2, dans lequel on sépare dans un deuxième étage de régénération (29) le métal lourd adsorbé dans le deuxième dispositif d'adsorption (25) du matériau adsorbant et on l'extrait sous forme métallique.

4. Procédé selon l'une des revendications 1 à 3, dans lequel la première régénération a lien à une température qui désintègre les gaz toxiques, notamment la dioxine et le furane, qui sont contenus le cas échéant dans les gaz d'évacuation et qui en ont été adsorbés.

5. Procédé selon la revendication 4, dans lequel la température s'élève au-dessus de 550°C.

6. Procédé selon la revendication 5, dans lequel la température est voisine de 650°C.

7. Procédé selon l'une des revendications 1 à 6, dans lequel pour l'exécution de la première régénération on guide un gaz inerte chaud à contre-courant à travers le matériau d'adsorption (7) chargé situé dans un réacteur.

8. Procède selon l'une des revendications 1 à 7, dans lequel la durée de séjour du matériau d'adsorption (7) dans le réacteur pour la première régénération s'élève à une demi-heure ou plus.

9. Procédé selon l'une des revendication 1 à 8, dans lequel le gaz NOₓ est décomposé catalytiquement dans un réacteur (14) après passage du premier dispositif d'adsorption (6) et séparation du gaz HCl par addition d'ammoniac.

10. Procédé selon la revendication 9, dans lequel avant la décomposition catalytique, le gaz est chauffé à une température de 100°C à l'aide d'un échangeur thermique (11).

11. Procédé selon la revendication 9 ou 10, dans lequel le gaz d'évacuation est refroidi à l'aide d'un échangeur thermique (5) avant le premier dispositif d'adsorption (6).

12. Procédé selon la revendication 10 et 11, dans lequel les deux échangeurs thermiques sont reliés l'un à l'autre.

13. Procédé selon l'une des revendications 1 à 12, dans lequel un filtre à poussières (3) et placé en amont du premier dispositif d'adsorption (6).

14. Procédé selon la revendication 13, dans lequel un électrofiltre est utilisé comme filtre à poussières (3).

15. Procédé selon la revendication 13 ou 14, dans lequel la poussière en suspension (4) filtrée dans le filtre à poussières (3) est intensément chauffée.

16. Procédé selon la revendication 15, dans lequel le gaz d'évacuation (35) provenant du chauffage intense de la poussière en suspension est conduit dans un troisième dispositif d'adsorption (36).

17. Procédé selon la revendication 16, dans lequel on soumet le matériau adsorbant (26) du troisième dispositif d'adsorption à une régénération exempte d'oxygène sous une température qui décompose des gaz toxiques adsorbés.

18. Procédé selon la revendication 17, dans lequel on conduit le matériau adsorbant (26) du troisième dispositif d'adsorption (36) au deuxième étage de régénération (29).

19. Procédé selon la revendication 17 ou 18, dans lequel la durée de séjour du matériau adsorbant (26) du troisième dispositif d'adsorption (36) pendant la régénération s'élève à une demi-heure ou plus.

20. Procédé selon la revendication 8 ou 19, dans lequel la durée de séjour s'élève à une heure ou plus.

21. Procédé selon l'une des revendications 1 à 20, dans lequel on utilise du coke actif comme matériau adsorbant (7, 26).

22. Procédé selon l'une des revendications 1 à 21, dans lequel on guide le gaz d'évacuation avant le premier dispositif d'adsorption (6) à travers une transition enrichie de NH₃.

23. Procédé selon l'une des revendications 13 à 19, ainsi que 20 et 21 dans la mesure où celles-ci sont rattachées à l'une des revendications 13 à 19, dans lequel on alimente le gaz d'évacuation (1) avec du NH₃ avant le filtre (3).

24. Procédé selon l'une des revendications 1 à 23, dans lequel on fabrique de l'acide chlorhydrique ou du NaCl, avec le gaz, dans une étape du procédé postérieure à la sortie du premier dispositif d'adsorption (6).
